# FASCICULE DE BREVET EUROPEEN

(11) **EP 2 054 783 B1**
(45) Date de publication et mention de la délivrance du brevet: **09.03.2011**
(21) Numéro de dépôt: 07823729.4
(22) Date de dépôt: 17.08.2007
(51) Int. Cl.: G05D 23/19, H05B 1/02, A47J 36/24

(54) **PROCEDE ET DISPOSITIF POUR COMMANDER UN APPAREIL ELECTRIQUE MENAGER DE CHAUFFAGE DE LIQUIDE**
VERFAHREN UND VORRICHTUNG ZUM STEUERN EINES HAUSHALTGERÄT ZUM ERWÄRMEN VON FLÜSSIGKEIT
METHOD AND DEVICE FOR CONTROLLING A HOUSEHOLD ELECTRICAL APPARATUS FOR HEATING LIQUID

(30) Priorité: 21.08.2006 FR 0653417
(43) Date de publication de la demande: 06.05.2009
(73) Titulaire: Seb S.A., 69130 Ecully (FR)
(72) Inventeur: IREMAN, Peter, 14114 Ver sur Mer (FR); DURAND, Lionnel, 14700 Saint Germain Langot (FR)
(74) Mandataire: Palix, Stéphane
(86) Numéro de dépôt international: PCT/FR2007/051829
(87) Numéro de publication internationale: WO 2008/023132

(56) Documents cités:
- EP-A- 0 866 278
- EP-A1- 0 348 298
- DE-C1- 10 056 068
- FR-A1- 2 633 482
- US-B1- 6 349 269

## Description

### DOMAINE TECHNIQUE

La présente invention concerne un procédé pour commander un appareil électrique ménager de chauffage de liquide, tel qu'une bouilloire. Un tel procédé est en particulier destiné à commander l'alimentation électrique de l'élément chauffant électrique composant un tel appareil ménager.

Par ailleurs, la présente invention se rapporte également à un dispositif pour commander un appareil électrique ménager de chauffage de liquide, destiné à mettre en oeuvre notamment le procédé objet de la présente invention.

### ETAT ANTERIEUR DE LA TECHINIQUE

Les appareils électriques ménagers pour le chauffage de liquide comportent un réservoir destiné à contenir le liquide à chauffer, ainsi qu'une coupelle généralement positionnée sur le fond du réservoir et destinée à transmettre les calories au liquide à chauffer. De manière connue, cette coupelle est chauffée par un élément chauffant qui, parcouru par un courant électrique, dissipe de l'énergie électrique par effet Joule. La puissance électrique dissipée par l'appareil dépend évidemment de ses dimensions, mais elle dépasse rarement 3000 W.

Outre la coupelle, un tel appareil ménager comporte nécessairement un dispositif de commande destiné à commander l'alimentation électrique de l'élément chauffant, en fonction notamment de la température de consigne à laquelle l'utilisateur de l'appareil souhaite chauffer le liquide.

Un tel dispositif de commande comporte un élément thermométrique apte à mesurer, directement ou indirectement, la température du liquide en chauffe. Ainsi, dans le cas de mesures indirectes, cet élément thermométrique réalise des mesures de la température par exemple au niveau de la coupelle. Cette température est représentative de la température du liquide en chauffe, et permet de commander l'alimentation électrique de l'élément chauffant.

En fonction de contraintes tel que l'encombrement ou le coût, un tel élément thermométrique pourra en effet être positionné au sein même du volume de liquide à chauffer, réalisant ainsi des mesures directes, ou bien sous la coupelle à une certaine distance de l'élément chauffant, de manière à réaliser ainsi des mesures indirectes.

Par exemple, les bouilloires classiques de l'art antérieur comprennent une plaque en aluminium pour répartir la chaleur, associée à la coupelle chauffante, généralement en acier inoxydable et à une grosse résistance électrique chauffante. Au niveau de la plaque se trouve un interrupteur dont un levier est déclenché par un bilame, formé de deux matériaux de coefficients de dilatation différents. Le bilame est placé en sortie d'un canal communiquant avec la partie supérieure du réservoir contenant le liquide en chauffe. Ainsi, lorsque se dégage de la vapeur au-dessus du liquide en ébullition, le bilame se déforme jusqu'à déclencher mécaniquement l'interrupteur au moment où le liquide atteint sa température d'ébullition.

Cependant, un tel dispositif de commande de l'appareil de chauffage de liquide présente plusieurs inconvénients. Tout d'abord, l'inertie du dispositif de commande est importante, car il faut un certain temps pour établir la pression de vapeur nécessaire au déclenchement du bilame. Or, plus le volume de liquide à chauffer est faible ou plus la puissance de chauffage est faible, plus longue est la durée de montée en pression par l'intermédiaire du canal de vapeur.

Donc, un tel appareil « gaspille » de l'énergie électrique jusqu'à la déformation du bilame, alors que le liquide est déjà en ébullition. En outre, le canal et le bilame forment un ensemble assez encombrant qui limite la compacité de l'appareil de chauffage. De plus, les mesures effectuées par le bilame sont relativement lentes et imprécises, ce qui altère les performances de l'appareil de chauffage.

Les procédés usuels de commande de tels appareils ménagers prévoient le plus souvent de chauffer le liquide jusqu'à une température de consigne. Cette température de consigne peut être réglée par l'utilisateur au moyen d'un organe de sélection. Alternativement à une telle sélection, la température de consigne peut être préalablement enregistrée pour opérer l'appareil selon un fonctionnement par défaut. Ainsi, dans le cas des bouilloires, l'utilisateur doit seulement enclencher un interrupteur pour commander le chauffage du liquide jusqu'à ébullition, c'est-à-dire jusqu'à une température proche de 100°C.

Naturellement, la température du liquide à l'issue d'un cycle de chauffage ne correspond pas toujours exactement à la température de consigne. Nonobstant le fait que la température du liquide n'est pas forcément uniforme dans tout le volume défini par le réservoir, il arrive qu'elle demeure légèrement inférieure à celle-ci. Cette approximation est fonction des performances du dispositif et du procédé de commande mis en oeuvre.

Dans le cas des bouilloires, la température de consigne préalablement enregistrée pour un fonctionnement par défaut est donc de 100°C, de manière à atteindre l'ébullition du liquide dans le cas où le liquide à chauffer est de l'eau.

Parmi les procédés de commande mis en oeuvre dans les appareils de l'art antérieur, une première solution consiste à mesurer en permanence la température du liquide en chauffe, puis à interrompre l'alimentation électrique de l'élément chauffant dès que la température d'ébullition est atteinte.

Ainsi, la bouilloire décrite dans le document GB-A-2 228 634 comporte un composant thermométrique qui mesure en permanence la température de la coupelle chauffante, afin, d'une part, de détecter une « marche à sec », c'est-à-dire sans liquide dans le réservoir et, d'autre part, de détecter l'ébullition du liquide pour interrompre le cycle de chauffage.

Cependant, la mise en oeuvre d'un tel procédé subit une inertie relativement grande, due notamment aux capacités thermiques élevées de la coupelle et de l'élément chauffant en métal ainsi qu'au temps de réponse de l'élément thermométrique. Du reste, la mesure de la température d'ébullition est indirecte, car ce procédé propose de calculer l'écart de température de la coupelle entre deux instants glissants dans le temps et séparés par une durée prédéterminée. Or, le chauffage doit nécessairement se poursuivre pendant cette durée prédéterminée puisque la température doit être mesurée à l'instant final. Donc, l'ébullition peut être atteinte dès le début de cette durée, augmentant de la sorte l'inertie du dispositif de commande. En outre, une certaine durée, même courte, est nécessaire au calcul de cet écart de température, allongeant encore le temps de réponse du dispositif de commande.

Par conséquent, un tel procédé conduit très souvent à un dépassement relativement important de la durée de chauffage réellement nécessaire pour atteindre l'ébullition du liquide. Or un tel dépassement peut être particulièrement important lorsque le volume de liquide est faible. Ainsi, ce type de procédé de commande n'est pas adapté au volume de liquide à chauffer. En effet, ce procédé permet d'atteindre la température de 100°C pour le volume maximal du réservoir. En revanche, ce dépassement ou cet allongement superflu du cycle de chauffage peut être très important pour un volume moyen ou faible.

De plus, ce dépassement implique une surconsommation d'énergie électrique ainsi qu'un entartrement prématuré de la coupelle, puisqu'elle doit dissiper un surcroît de quantité de chaleur à chaque cycle de chauffage. En outre, le dépassement prolongé de la température de consigne peut entraîner une perte de liquide par évaporation, voire sa dégradation s'il s'agit d'un liquide autre que de l'eau.

Pour éviter un tel dépassement, le document US-4 948 950 propose un procédé alternatif consistant à diminuer la puissance électrique fournie à l'élément chauffant de manière à ralentir l'augmentation de la température du liquide à l'approche de la température de consigne.

Néanmoins, si un tel procédé permet d'éviter un dépassement de la température de consigne ou une surchauffe, il nécessite la mise en oeuvre d'un dispositif de contrôle et de variation de la puissance électrique de l'appareil. Or, cela entraîne nécessairement un coût et un encombrement supplémentaire pour l'appareil ménager ainsi équipé, inconvénients qui peuvent s'avérer rédhibitoires à la vente, compte tenu du haut degré de concurrence existant dans le domaine des appareils ménagers.

De plus, la diminution de la puissance électrique dissipée implique le ralentissement du chauffage du liquide et allonge donc la durée du cycle de chauffage. Cet allongement est d'autant plus important que le volume à chauffer est important. Or, la durée du cycle de chauffage est un paramètre primordial pour l'utilisateur de l'appareil. Par conséquent, un tel procédé n'est pas non plus réellement satisfaisant.

Un appareil ménager ainsi équipé et fonctionnant selon un tel procédé présente donc des inconvénients qui peuvent s'avérer rédhibitoires pour la vente, compte tenu du haut degré de concurrence existant dans le domaine des appareils électroménagers.

Par ailleurs, le document EP-0348298 décrit une stratégie de commande d'un élément chauffe, mais fonctionne sur un principe bien différent de celui de l'invention.

En résumé, le principe décrit dans ce document consiste à assurer le chauffage à partir d'une température de départ, jusqu'à un premier niveau de température prédéterminé (T1). Puis, on décompte le temps qui s'écoule jusqu'à ce que la température atteigne un second seuil prédéfini (T2). Ensuite, on assure un maintien en température par un chauffage pendant une durée supplémentaire, qui est fonction à la fois des deux niveaux de température intermédiaire T1 et T2, ainsi que de la température initiale. L'objectif de cette stratégie est d'assurer une régulation de la température selon une stratégie qui permet une montée la plus rapide possible, sans brûler les aliments, puis après cette montée rapide, à assurer le maintien en température qui permet d'éviter un chauffage excessif et une dégradation des aliments.

La présente invention a donc pour objectif de réaliser un procédé et un dispositif pour commander un appareil électrique ménager de chauffage de liquide ne présentant pas les inconvénients de l'art antérieur, c'est-à-dire chauffant sans allongement superflu de la durée d'un cycle de chauffage et ne nécessitant pas l'implantation d'un dispositif de commande encombrant et onéreux.

### OBJET DE L'INVENTION

La présente invention a donc pour objet un procédé pour commander un appareil électroménager de chauffage de liquide, tel qu'une bouilloire, permettant d'atteindre 100°C ou plus généralement la température d'ébullition, de manière relativement précise, rapide et économique.

L'appareil électrique ménager comporte un réservoir destiné à contenir le volume de liquide à chauffer, ainsi qu'une coupelle associée à un élément chauffant électrique dont l'alimentation électrique est commandée en fonction de ces mesures thermométriques, de manière à chauffer le liquide jusqu'à ébullition.

Selon l'invention, ce procédé comprend les étapes consistant :
- à alimenter ledit élément chauffant jusqu'à ce qu'un premier niveau de température atteigne un seuil prédéterminé ;
- puis à alimenter l'élément chauffant pendant une durée prédéterminée ;
- à mesurer un deuxième niveau de température à l'issue de cette durée ;
- puis à alimenter l'élément chauffant pendant une durée supplémentaire dont la valeur est fonction des premier et deuxième niveaux de température.

En d'autres termes, on évalue le volume d'eau contenu dans le réservoir en mesurant la variation de température sur une durée prédéterminée, puis on adapte à ce volume la durée de chauffage encore nécessaire, de manière à interrompre le chauffage le plus tôt possible après l'ébullition.

Par conséquent, la durée de chauffage du liquide est adaptée au volume de liquide à chauffer, de manière à atteindre l'ébullition en tenant compte des inerties thermiques et/ou métrologiques susceptibles d'intervenir au cours du procédé de commande de l'appareil. Ainsi, que l'utilisateur introduise un volume de liquide faible ou un volume de liquide important, la durée du cycle de chauffage est la durée optimale pour atteindre 100°C. Ainsi, il n'y a pas d'allongement superflu de la durée du cycle de chauffage.

En pratique, la valeur de cette durée supplémentaire peut être déterminée par un calcul consistant à former la différence entre les premier et deuxième niveaux de température, à multiplier la différence par un coefficient déterminé, puis à ajouter au résultat obtenu une durée fixée.

En d'autres termes, la variation de température est ici constituée par la différence, entre deux instants, des niveaux indiqués par l'élément thermométrique. Un tel calcul permet d'optimiser la durée du chauffage en fonction du volume de liquide à chauffer.

Selon une forme particulière de réalisation de l'invention, la durée prédéterminée peut être comprise entre 5 s et 10 s. Une telle durée permet de relever une variation de niveau de température significative.

Avec une durée prédéterminée d'une telle longueur, l'estimation du volume contenu dans le réservoir est relativement précise, ce qui permet d'optimiser la durée de chauffage supplémentaire pour atteindre l'ébullition.

En pratique, la coupelle chauffante peut être mince et ces mesures thermométriques peuvent être effectuées au moyen d'une résistance à coefficient de température négatif.

Un tel composant thermométrique est en effet apte à fournir des mesures de façon relativement rapide et précise, ce qui conduit à une bonne rapidité dans la commande de l'appareil ménager de chauffage de liquide. Par mince, on entend une coupelle présentant une épaisseur comprise typiquement entre 0.8 et 1.2 millimètres, cette coupelle étant avantageusement réalisée en un métal, qui est donc bon conducteur thermique. La capacité calorifique de la coupelle est ainsi déterminée par le matériau qui la constitue et par cette épaisseur.

Selon une forme de réalisation particulière de l'invention, cette résistance à coefficient de température négatif peut être positionnée sur cette coupelle mince au sein d'une région exempte de l'élément chauffant électrique, laquelle demeure donc relativement froide lors du chauffage du liquide.

Ainsi, la mesure thermométrique est rapidement et directement représentative de la température de l'eau contenue dans la bouilloire, car on limite le nombre donc l'inertie thermique des composants intervenant dans la mesure thermométrique.

Selon une autre forme de réalisation de l'invention, l'alimentation électrique de l'élément chauffant électrique peut être commandée par un dispositif électronique positionné au sein de cette région dite « froide ».

Cela permet, d'une part, d'augmenter la compacité de l'appareil électrique de chauffage et, d'autre part, de commander l'élément chauffant avec une bonne réactivité, car le dispositif électronique subit peu d'inertie thermique.

En pratique, ce dispositif électronique peut être positionné à proximité de la résistance à coefficient de température négatif.

Cela permet de minimiser les parasites électriques intermédiaires perturbant les signaux électriques émis par la résistance à coefficient de température négatif. De plus, les composants électroniques présentent alors une durée de vie supérieure.

Selon une forme de réalisation de l'invention, le procédé peut comprendre une étape itérative consistant :
- à alimenter l'élément chauffant ;
- à mesurer le niveau de température courant à intervalles réguliers ;
l'étape itérative se finissant lorsque le niveau de température courant atteint le seuil prédéterminé.

Une telle boucle permet de lancer la suite du procédé de l'invention dès que le seuil prédéterminé est atteint.

De manière pratique, les mesures thermométriques peuvent être effectuées par une résistance à coefficient de température négatif.

Un tel composant présente un temps de réponse relativement court par rapport à la durée du cycle de chauffage, ce qui limite l'inertie « métrologique » du procédé. Il offre en outre l'avantage de présenter, dans la plage de températures à mesurer au niveau de la coupelle, une caractéristique « bijective », c'est-à-dire qu'à une température et un volume de liquide donnés correspond un seul niveau de tension entre ses bornes et réciproquement.

Par ailleurs, l'invention se rapporte également à un dispositif pour commander un appareil électrique ménager de chauffage de liquide selon le procédé objet de l'invention. Selon l'invention, ce dispositif comprend une résistance à coefficient de température négatif, un élément de commutation, tel qu'un relais ou un TRIAC, destiné à enclencher ou à déclencher l'alimentation de l'élément chauffant, ainsi qu'une unité de mémorisation comportant au moins deux registres destinés à mémoriser des niveaux de température.

Un tel dispositif, fonctionnant selon le procédé objet de l'invention, est donc apte à chauffer le liquide contenu dans le réservoir en adaptant la durée du cycle de chauffage au volume de liquide à chauffer.

Par conséquent, que l'utilisateur introduise un volume de liquide faible ou important, la durée du cycle de chauffage est optimisée. Ainsi, il n'y a pas d'allongement superflu de la durée du cycle de chauffage.

En pratique, le dispositif peut comprendre un composant de sécurité thermique commandant l'arrêt du procédé de chauffage lorsque la vitesse d'augmentation de la température de l'élément thermométrique est supérieure à une vitesse limite prédéterminée, de manière à interrompre le chauffage en cas d'absence de liquide.

Ainsi, le dispositif est apte à détecter le fonctionnement à sec de l'appareil ménager, pour le cas où l'utilisateur n'aurait pas introduit de liquide dans le réservoir.

### BREVE DESCRIPTION DES FIGURES

La figure 1 est un organigramme présentant les étapes d'un procédé conforme à une forme de réalisation de l'invention.
La figure 2 est un graphique représentant, au cours d'un cycle de chauffage et pour trois volumes différents de liquide, l'augmentation de la température et l'évolution des signaux émis par un élément thermométrique, en l'occurrence une résistance à coefficient de température négatif.

### MODE DE REALISATION

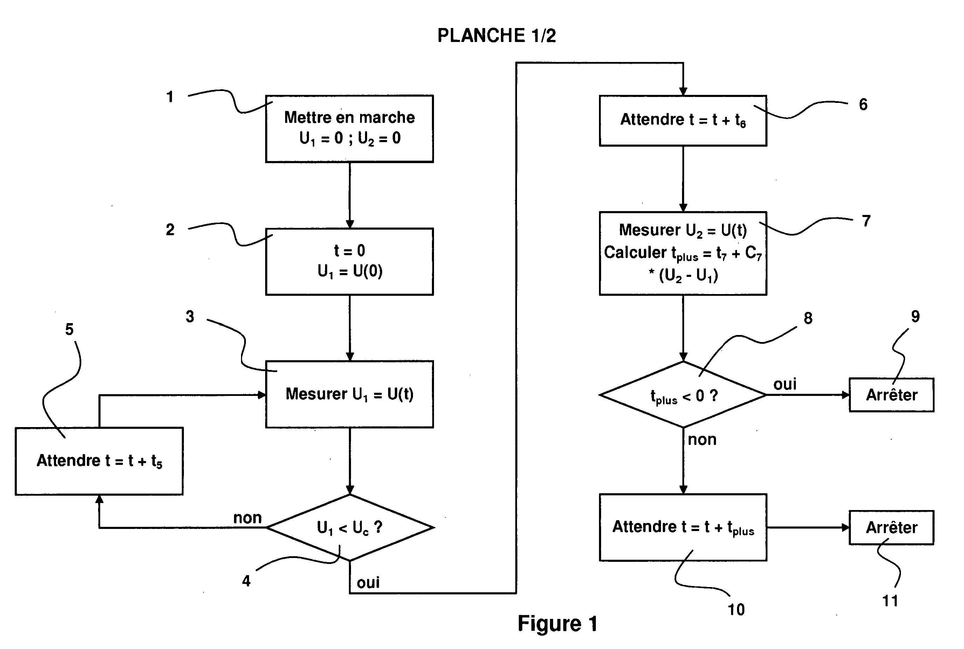

La figure 1 représente donc la succession d'étapes permettant d'accomplir un cycle de chauffage complet, c'est-à-dire jusqu'à ce que le liquide contenu dans le réservoir d'un appareil électroménager de chauffage atteigne 100°C. En l'occurrence, cet appareil est une bouilloire dont la fonction première est, par définition, de faire bouillir le liquide, le plus souvent de l'eau. Une coupelle en acier inoxydable, donc thermiquement conductrice, est installée au fond du réservoir pour transmettre au liquide à chauffer la chaleur émise par un élément chauffant électrique.

La première étape **1** représentée sur l'organigramme de la figure 1 consiste à mettre en marche la bouilloire. En pratique, pour accomplir cette étape, l'utilisateur, après avoir préalablement rempli le réservoir de liquide, bascule un interrupteur qui autorise à son tour l'alimentation électrique de l'élément chauffant par le dispositif de commande de l'appareil. Ici, le dispositif de commande de l'appareil comprend un composant de sécurité thermique apte à détecter le fonctionnement à sec de l'appareil ménager, pour le cas où l'utilisateur n'aurait pas introduit de liquide dans le réservoir.

Conformément à l'invention, l'appareil est équipé d'un élément thermométrique apte à réaliser des mesures représentatives de la température du liquide en chauffe. En l'occurrence, l'élément thermométrique est une résistance variable à coefficient de température négatif (abrégé en « résistance CTN »).

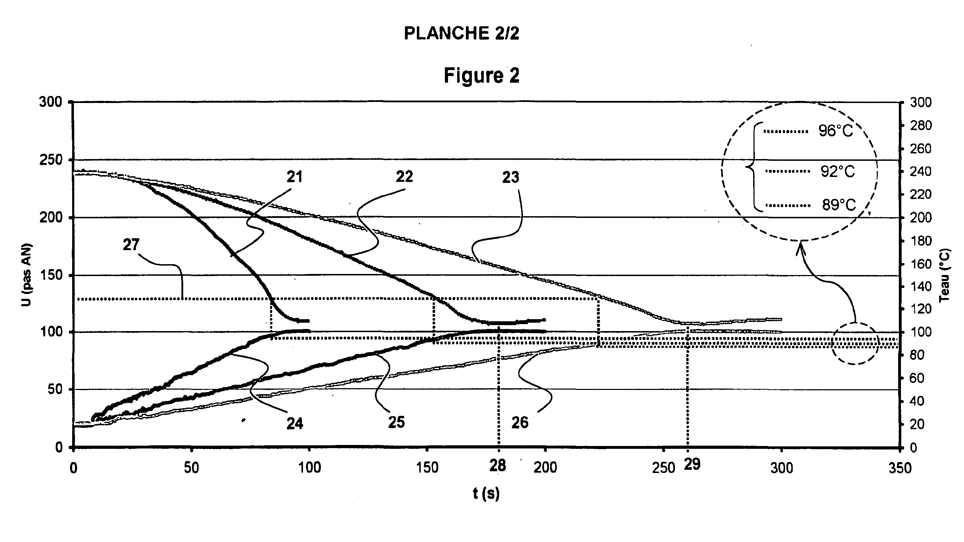

De manière connue, lorsqu'elle est parcourue par un courant constant, une résistance CTN présente entre ses bornes une différence de potentiel qui diminue lorsque sa température augmente, comme le montrent les courbes **21, 22** et **23** de la figure **2**. Dans l'exemple exposé ici, la résistance CTN est positionnée au sec, sous la coupelle dans la zone où se trouve l'élément chauffant. Elle doit en tout cas être placée dans une région où la température n'excède pas sa propre limite de destruction, c'est-à-dire classiquement une température de 105°C.

Conformément à une forme de réalisation de l'invention, cette résistance CTN est positionnée sous la coupelle si l'on considère la bouilloire avec la coupelle en bas. En fait, la résistance CTN est positionnée « sur » la coupelle au sens où elle se trouve rapportée sur sa surface.

De préférence, la coupelle présente une épaisseur relativement faible, par exemple comprise entre 0.8 et 1.2 mm. Ainsi, les mesures effectuées par la résistance CTN sont peu affectées par l'inertie thermique de la coupelle et elles sont plus représentatives de la température du liquide en chauffe.

De préférence encore, la résistance CTN est rapportée sur la coupelle au sein d'une zone « froide », d'où est absent l'élément chauffant, lequel peut se présenter sous forme d'une piste électriquement résistive sérigraphiée sur la coupelle. Dans l'exemple de réalisation exposé ici, la zone « froide » loge en outre un circuit électronique servant à commander l'alimentation électrique de l'élément chauffant. La résistance CTN est positionnée à proximité de ce circuit électronique.

Cela signifie que la tension entre ses bornes représente indirectement, et néanmoins précisément, la température du liquide en chauffe pour un volume de liquide donné. Il faut toutefois prendre soin de réaliser préalablement l'étalonnage de la caractéristique de la résistance CTN, une fois qu'elle est positionnée dans l'appareil, en fonction de températures de liquide connues.

L'étape **2** comprend la remise à zéro d'un compteur de temps du dispositif de commande, ce qui est indiqué sur la figure 1 par l'équation « **t = 0** ». De plus, au cours de cette deuxième étape, le dispositif de commande enregistre la différence de potentiel initialement produite entre les bornes de la résistance CTN. Cette initialisation est matérialisée sur l'organigramme de la figure 1 par l'équation « **U₁ = U(0)** ». En pratique, cette différence de potentiel est mesurée après une durée d'environ 1 s.

Au cours de l'étape **3** suivante, le liquide continue de chauffer, l'alimentation électrique de l'élément chauffant étant maintenue depuis l'étape **1** de mise en marche, car il n'y a pas eu d'étape commandant l'interruption du chauffage. Cette troisième étape consiste à mesurer la tension courante aux bornes de la résistance CTN, c'est-à-dire la tension à l'instant où se déroule cette étape **3**. Dans l'exemple de réalisation illustré par la figure 1, cette mesure est en outre mémorisée dans un registre approprié, ce qui se traduit sur la figure 1 par l'équation « **U₁ = U(t)** ».

Conformément à l'invention, l'étape **3** de mesure est associée à une étape de test **4,** au cours de laquelle il est vérifié si le niveau de température U₁ mesuré est supérieur à un seuil prédéterminé, noté **U_{C}.** Ce seuil **U_{C}** est préalablement déterminé en fonction des caractéristiques de la résistance CTN utilisée. Dans le cadre de l'exemple de la figure 1, ce seuil prédéterminé **U_{C}** correspond à 130 pas AN.

En effet, la tension aux bornes de la résistance CTN est de l'ordre de quelques Volts, mais elle est en réalité mesurée et indiquée en pas de quantification d'un Convertisseur Analogique Numérique (abrégé en CAN). La mesure en pas Analogique Numérique (ou AN) correspond à la tension en Volts produite aux bornes de la résistance CTN, après une étape de numérisation permettant de traiter le signal issu de la résistance CTN sous forme numérique. La tension est donc numérisée sur un nombre de pas de quantification dépendant du convertisseur. Dans l'exemple exposé ici, la tension maximale produite par la résistance CTN à froid est numérisée par 256 pas de quantification AN ou pas AN.

Comme exposé ci-dessus, l'étape suivante du procédé objet de l'invention dépend du résultat du test de l'étape **4**. Ainsi, si le seuil prédéterminé à 130 pas AN n'est pas atteint, cela signifie que la température de la résistance CTN est encore assez loin de l'objectif à atteindre et, par conséquent, que la température de l'eau contenue dans le réservoir de l'appareil est également relativement loin de 100°C.

Dans ce cas, le procédé entre dans une boucle en passant par l'étape d'attente **5**. Autrement dit, l'étape **3** se reproduit tant que la tension (ou le niveau de température) U₁ mesurée est inférieure à un seuil prédéterminé **U_{C}**. L'étape d'attente **5** présente une durée d'attente **t₅** qui est fixée en fonction de la puissance de chauffage, de la capacité du réservoir, du temps de réponse de la résistance CTN etc. Dans le cas de la figure **1**, cette durée d'attente **t₅** vaut environ une seconde.

Ainsi, à chaque seconde, on réalise une mesure de la température de l'eau par l'intermédiaire de la mesure la température de la résistance CTN et on continue de chauffer l'eau jusqu'à atteindre le seuil prédéterminé **U_{C}**, à savoir ici celui pour lequel la résistance CTN produit une différence de potentiel de 130 pas AN.

Lorsque ce seuil **U_{C}** est atteint, on sait, après étalonnage de la résistance CTN, que la température de l'eau contenue dans le réservoir de l'appareil est comprise entre 89°C et 96°C, selon le volume d'eau. Comme indiqué précédemment, lorsque le seuil prédéterminé U_{C} est atteint, c'est-à-dire lorsque le test **4** donne un résultat positif, le procédé objet de l'invention passe dans une étape **6**.

L'étape **6** est une étape de temporisation consistant à continuer à chauffer pendant une durée prédéterminée **t₆** de manière à estimer, conformément à l'invention, le volume d'eau contenue dans le réservoir. Au cours de cette étape **6,** l'eau chauffe et continue d'approcher de l'ébullition. Dans le cas de la figure **1**, la durée prédéterminée **t₆** est fixée à 8 s.

La durée **t₆** est déterminée en fonction de la capacité du réservoir de l'appareil et de la puissance de chauffage. En effet, la tension aux bornes de la résistance CTN, donc la température de l'eau, dépend naturellement du volume d'eau que l'utilisateur a versé dans l'appareil. Ainsi, dans le cas où il y a peu d'eau dans le réservoir, la durée de 8 s de chauffage va permettre au faible volume d'eau d'atteindre les 100°C. A l'inverse, pour un volume important, par exemple 2 L et une puissance électrique inférieure à 3 000 W, l'eau contenue dans le réservoir voit sa température augmenter, sans néanmoins atteindre 100°C.

Conformément à l'invention, l'étape suivante, ou étape **7,** consiste, d'une part, à mesurer la température **U₂** atteinte à l'issue de la durée prédéterminée de 8 s et, d'autre part, à déterminer par calcul une durée de chauffage supplémentaire appelée **tₚₗᵤₛ** dans l'organigramme de la figure 1.

Conformément à une forme de réalisation de l'invention, la valeur de cette durée supplémentaire **tₚₗᵤₛ** est déterminée par un calcul dans lequel la différence [**U₂ - U₁**] entre les premier **U₁** et deuxième **U₂** niveaux de température mesurée par la résistance CTN est multipliée par un coefficient **C₇**, ici égal à 1,5. On ajoute ensuite au produit une durée fixée **t₇**, en l'occurrence de 28 s. Pour procéder au calcul de l'étape **7** [tₚₗᵤₛ = t₇ + C₇ * (U₂ - U₁)], il est nécessaire d'utiliser la tension **U₁** préalablement mémorisée dans un registre..

Les valeurs de la durée fixée **t₇** (28 s) et du coefficient **C₇** (1,5) sont choisies de telle sorte à atteindre l'ébullition de manière quasi-certaine à l'issue de la durée supplémentaire calculée **tₚₗᵤₛ**. Cette durée **t₇** et ce coefficient **C₇** dépendent des paramètres choisis pour la position de la résistance CTN par rapport à la coupelle, l'épaisseur et la forme de la coupelle, c'est-à-dire sa capacité thermique, la géométrie de l'élément chauffant etc, et, bien entendu des caractéristiques de la résistance CTN. En outre, le coefficient **C₇** dépend du nombre de pas AN d'échantillonnage disponible pour numériser la tension maximale, par exemple de 5 V, aux bornes de la résistance CTN.

Dans tous les cas, la durée supplémentaire calculée **tₚₗᵤₛ** est inférieur à la durée fixée **t₇**, puisqu'au cours du chauffage de l'eau, la tension aux bornes de la résistance CTN diminue, si bien que la différence [**U₂ - U₁**] est toujours négative. De plus, la durée supplémentaire calculée **tₚₗᵤₛ** est d'autant plus courte que la température a augmenté rapidement pendant la durée **t₆** et donc que le volume d'eau est faible.

L'étape **8** suivante est un test consistant à vérifier si la durée supplémentaire **tₚₗᵤₛ** calculée à l'étape **7** est positive, c'est-à-dire si elle a un sens physique. Le test **8** conduit donc à deux possibilités.

Tout d'abord, si la durée supplémentaire **tₚₗᵤₛ** est négative, il convient d'arrêter immédiatement le chauffage, car l'eau a atteint une température de 100°C. En effet, cela signifie que la différence [**U₂** - **U₁**] est relativement importante et donc que le volume de liquide dans le réservoir est relativement faible, comme le montre la figure 2 ci-après détaillée.

Or, dans le cas où le volume à chauffer est relativement faible, les calories dissipées par l'élément chauffant pendant la durée prédéterminée de 8 s au cours de l'étape **6** suffisent au liquide pour atteindre 100°C. Dans ce cas, l'alimentation électrique de l'élément chauffant est interrompue au cours de l'étape suivante, l'étape **9**.

En revanche, lorsque le calcul a conduit à déterminer une durée supplémentaire **tₚₗᵤₛ** positive, cela signifie que la différence [**U₂ - U₁**] est relativement faible et donc que le volume de liquide à chauffer est relativement important, comme le montre également la figure 2 décrite ci-après. Dans ce cas, le test **8** de l'étape étant positif, le dispositif de commande passe dans une étape de temporisation **10** au cours de laquelle l'alimentation électrique de l'élément chauffant est maintenue de manière à chauffer le liquide pendant la durée supplémentaire **tₚₗᵤₛ**. Puis, à l'issue de cette durée supplémentaire **tₚₗᵤₛ,** l'alimentation électrique de l'élément chauffant est interrompue à l'étape **11**, le liquide à chauffer étant supposé avoir atteint la température de 100°C. **Il** faut noter ici que l'écart entre la température du liquide et la température mesurée par la résistance CTN est d'autant plus important que le volume de liquide à chauffer est grand.

Bien évidemment, on pourrait changer les paramètres du procédé illustré par la figure 1, selon les caractéristiques physiques de l'appareil électroménager mis en oeuvre. Parmi ces caractéristiques physiques, on trouve notamment les caractéristiques de la résistance CTN, la capacité du réservoir de l'appareil, la puissance de l'élément chauffant et sa capacité à dissiper les calories dans le liquide à chauffer.

La figure 2 est un chronogramme présentant l'évolution de la valeur numérique de la tension aux bornes de la résistance CTN, exprimée en pas AN, en fonction du temps exprimé en secondes (courbes **21, 22 et 23**). Les courbes **21, 22 et 23** présentent cette évolution selon le volume à chauffer. Ainsi, les courbes **21, 22** et **23** concernent respectivement un volume de 0,5 L, 1 L et 1,5 L.

Concomitamment à ces trois courbes, le chronogramme de la figure 2 présente également l'évolution de la température de l'eau exprimée en degrés Celsius (courbes **24, 25** et **26**), selon le volume à chauffer. Ainsi, les courbes **24, 25** et **26** se rapportent respectivement à un volume à chauffer de 0,5 L, 1 L et 1,5 L.

Comme on le voit en comparant les courbes **24** à **26,** il est plus long, à puissance dissipée constante, de chauffer un volume important de liquide que de chauffer un volume faible. Ainsi, avec la bouilloire employée dans le cadre de la figure 2, on peut faire bouillir 0,5 L d'eau en 80 s, tandis qu'il faut environ 250 s pour faire bouillir 1,5 L d'eau.

Comme le montre également la figure **2**, la température de l'eau en ébullition ne dépasse pas 100°C, ce qui signifie que l'on se place dans des conditions normales de pression. Néanmoins et de manière connue, si la bouilloire était employée en altitude, la température d'ébullition de l'eau pourrait être sensiblement abaissée.

Comme on peut le voir sur la figure **2**, la résistance CTN employée permet de déterminer de manière univoque, ou bijective, la température du liquide en chauffe pour un volume de liquide donné, puisque à une température donnée ne correspond qu'une tension à ses bornes, ce qui apparaît clairement lorsque l'on coupe les courbes **21-26** selon une ligne verticale passant par n'importe quelle abscisse. Puisque la relation entre la tension aux bornes de la résistance CTN et la température du liquide dépend du volume de liquide à chauffer, l'algorithme de traitement des mesures thermométriques compense cette dépendance, préalablement évaluée par étalonnage.

La courbe **21**, correspondant à un faible volume à chauffer, présente une forte pente, ce qui signifie qu'une durée de chauffage donnée **t₇**, en particulier les 8 s de l'étape **6**, entraîne une élévation de la température du liquide relativement importante. A l'inverse, la courbe **23** correspondant à un volume à chauffer important, présente une pente faible, ce qui signifie que pour une durée donnée de chauffage, l'élévation de température du liquide demeure relativement faible.

Par ailleurs, si l'on suit sur la figure 2 la ligne pointillée horizontale **27**, jusqu'à couper chacune des trois courbes **21, 22** et **23**, puis si l'on reporte cette intersection respectivement sur chacune des courbes **24** à **26**, on constate que le seuil prédéterminé de température, à savoir 130 pas AN correspond à une température d'environ 96°C, tandis qu'elle représente seulement 89°C dans le cas où le réservoir contient 1,5 L d'eau.

Ces niveaux de température sont donc plus ou moins proches de la température cible de 100°C et il faut donc chauffer respectivement chacun de ces volumes pendant une durée supplémentaire **tₚₗᵤₛ** adaptée, calculée en fonction du volume d'eau contenue dans le réservoir. Les instants notés **28** et **29** sur la figure 2 matérialisent l'arrêt du chauffage, donc peu de temps après que l'eau a atteint 100°C. A partir des instants **28** et **29** et conformément au procédé objet de l'invention, le dispositif de commande arrête l'alimentation électrique de l'élément chauffant, si bien que la résistance CTN commence à refroidir. Ce refroidissement est perceptible dans la légère remontée finale de sa tension (en pas AN sur la figure 2).

Ainsi, le procédé objet de l'invention, permet d'arrêter l'alimentation électrique de l'élément chauffant très peu de temps après l'ébullition du liquide. Par conséquent, la durée de chauffage superflu est relativement courte, ce qui limite l'entartrement prématuré de la coupelle, la consommation d'énergie électrique, l'évaporation ou la dégradation du liquide et ce, quel que soit le volume à chauffer. La durée totale de chauffage est donc adaptée au volume de liquide contrairement aux procédés de l'art antérieur.

En outre, le procédé et le dispositif objet de la présente invention ne nécessitent aucune variation de la puissance électrique fournie à l'élément chauffant, ce qui permet, contrairement à l'art antérieur, de réduire le coût et l'encombrement d'un appareil ménagé.

De plus, dans la mesure où il n'y a pas de diminution de la puissance électrique dissipée par l'élément chauffant, la durée du cycle de chauffage jusqu'à ébullition est la plus courte possible, lorsque l'on met en oeuvre la présente invention, quel que soit le volume d'eau à chauffer.

Par conséquent, le procédé objet de l'invention permet de mieux contrôler l'ébullition du liquide et, partant, d'éviter tout débordement. Il devient donc possible de réduire la marge de sécurité entre le niveau d'eau maximal versé par l'utilisateur et le bord supérieur de l'appareil ménagé. Cela permet notamment de rendre l'appareil plus compact et moins onéreux.

## Revendications

1. Procédé de commande d'un appareil électrique ménager de chauffage de liquide, ledit appareil comportant un réservoir destiné à contenir le liquide à chauffer, ainsi qu'une coupelle associée à un élément chauffant électrique dont l'alimentation électrique est commandée en fonction de mesures thermométriques représentatives de la température dudit liquide de manière à chauffer ledit liquide jusqu'à ébullition, ***caractérisé* en ce qu'**il comprend les étapes consistant :
- à alimenter ledit élément chauffant jusqu'à ce qu'un premier niveau de température (U₁) atteigne un seuil prédéterminé (U_{C}) ;
- puis à alimenter l'élément chauffant pendant une durée prédéterminée (t₆) ;
- à mesurer un deuxième niveau de température (U₂) à l'issue de ladite durée prédéterminée (t₆) ;
- puis à alimenter l'élément chauffant pendant une durée supplémentaire (tₚₗᵤₛ) dont la valeur est fonction desdits premier et deuxième niveaux de température (U₁, U₂).

2. Procédé selon la revendication 1, ***caractérisé* en ce que** ladite durée supplémentaire (tₚₗᵤₛ) est déterminée par un calcul consistant à former la différence entre lesdits premier et deuxième niveaux de température (U₁, U₂), à multiplier ladite différence par un coefficient déterminé (C₇), puis à ajouter au résultat obtenu une durée fixée (t₇).

3. Procédé selon l'une des revendications précédentes, ***caractérisé* en ce que** la durée prédéterminée (t₆) est comprise entre 5 s et 10 s, de préférence voisine de 8 s.

4. Procédé selon l'une des revendications précédentes, ***caractérisé* en ce que** ladite coupelle est mince et **en ce que** lesdites mesures thermométriques sont effectuées au moyen d'une résistance à coefficient de température négatif.

5. Procédé selon la revendication 4, ***caractérisé* en ce que** ladite résistance à coefficient de température négatif est positionnée sur ladite coupelle au sein d'une région exempte dudit élément chauffant électrique, ladite région demeurant donc relativement froide lors de la mise en oeuvre dudit procédé.

6. Procédé selon la revendication 5, ***caractérisé* en ce que** l'alimentation électrique dudit élément chauffant électrique est commandée par un dispositif électronique positionné au sein de ladite région.

7. Procédé selon l'une des revendications 5 ou 6, ***caractérisé* en ce que** ledit dispositif électronique est positionné à proximité de ladite résistance à coefficient de température négatif.

8. Procédé selon l'une des revendications précédentes, ***caractérisé* en ce qu'**il comprend une étape itérative (3, 4, 5) consistant :
- à alimenter l'élément chauffant ;
- à mesurer le niveau de température courant (U₁) à intervalles réguliers ; ladite étape itérative (3, 4, 5) se finissant lorsque le niveau de température courant (U₁) atteint le seuil prédéterminé (U_{C}).

9. Dispositif pour commander un appareil électrique ménager de chauffage de liquide selon le procédé de l'une des revendications précédentes, ***caractérisé* en ce qu'**il comprend une résistance à coefficient de température négatif, un élément de commutation, tel qu'un relais ou un TRIAC, destiné à enclencher ou à déclencher l'alimentation de l'élément chauffant, ainsi qu'une unité de mémorisation comportant au moins deux registres destinés à mémoriser des niveaux de température.

10. Dispositif selon la revendication 9, **caractérisé en ce qu'**il comprend un composant de sécurité thermique commandant l'arrêt du procédé de chauffage selon l'une des revendications 1 à 8 lorsque la vitesse d'augmentation de la température de l'élément thermométrique est supérieure à une vitesse limite prédéterminée, de manière à interrompre le chauffage en cas d'absence de liquide.

## Claims

1. Method for controlling a household electrical apparatus for heating liquid, said apparatus comprising a reservoir for containing the liquid to be heated, and a retainer associated with an electric heating element with the power supply thereof being controlled as a function of thermometric measurements representative of the temperature of said liquid so as to heat said liquid to boiling point, **characterized in that** it includes the following steps comprising:
- supplying power to said heating element until a first temperature level (U₁) reaches a predetermined threshold (U_{C});
- then supplying power to the heating element for a predetermined period of time (t₆);
- measuring a second temperature level (U₂) at the end of said predetermined period of time (t₆);
- then supplying power to the heating element for an additional period of time (tₚₗᵤₛ) with the value thereof being a function of said first and second temperature levels (U₁, U₂).

2. Method as claimed in claim 1, **characterized in that** said additional period of time (tₚₗᵤₛ) is determined using a calculation that comprises forming the difference between said first and second temperature levels (U₁, U₂), multiplying said difference by a set coefficient (C₇), and then adding to the result obtained a fixed duration of time (t₇).

3. Method as claimed in one of the previous claims, **characterized in that** the predetermined period of time (t6) is between 5 s and 10 s and preferably in the vicinity of 8 s.

4. Method as claimed in one of the previous claims, **characterized in that** said retainer is thin and **in that** said thermometric measurements are taken by means of a negative temperature coefficient resistance.

5. Method as claimed in claim 4, **characterized in that** said negative temperature coefficient resistance is positioned on said retainer in an area free of said electric heating element, said area therefore remaining relatively cold during the implementation of said method.

6. Method as claimed in claim 5, **characterized in that** the power supply to said electric heating element is controlled by an electronic device positioned in said area.

7. Method as claimed in one of claims 5 or 6, **characterized in that** said electronic device is positioned in proximity to said negative temperature coefficient resistance.

8. Method as claimed in one of the previous claims, **characterized in that** it includes an iterative step (3, 4, 5) comprising/
a. supplying power to the heating element;
b. measuring the current temperature level (U₁) at regular intervals;
said iterative step (3, 4, 5) finishing when the current temperature level (U₁) reaches the predetermined threshold (U_{C}).

9. Device for controlling a household electrical apparatus for heating liquid in accordance with the method as claimed in one of the previous claims, **characterized in that** it includes a negative temperature coefficient resistance, a switching element, such as a relay or a TRIAC, for switching the power supply to the heating element on or off, and a storage unit comprising at least two registers for storing temperature levels.

10. Device as claimed in claim 9, **characterized in that** it includes a thermal safety component for cut-off control of the heating method as claimed in one of claims 1 to 8 when the rate of increase of the temperature of the thermometric element exceeds a predetermined maximum rate, so as to interrupt the heating in the event of an absence of liquid.

## Patentansprüche

1. Verfahren zur Steuerung eines elektrischen Haushaltsgeräts für die Erhitzung von Flüssigkeit, wobei dieses Gerät einen Behälter umfasst, der dazu bestimmt ist, die zu erhitzende Flüssigkeit zu enthalten, sowie eine Schale, der ein elektrisches Heizelement zugeordnet ist, dessen Stromversorgung in Abhängigkeit von Temperaturmessungen, die für die Temperatur der Flüssigkeit repräsentativ sind, so gesteuert wird, dass die Flüssigkeit bis zum Sieden erhitzt wird, **dadurch gekennzeichnet, dass** es die Schritte umfasst, die darin bestehen, dass
- das Heizelement erhitzt wird, bis eine erste Temperaturhöhe (U₁) eine vorbestimmte Schwelle (U_{C}) erreicht;
- dann das Heizelement während einer vorbestimmten Dauer (t₆) versorgt wird;
- nach dieser vorbestimmten Dauer (t₆) eine zweite Temperaturhöhe (U₂) gemessen wird;
- dann das Heizelement während einer zusätzlichen Dauer (tₚₗᵤₛ) versorgt wird, deren Wert von der ersten und der zweiten Temperaturhöhe (U₁, U₂) abhängig ist.

2. Verfahren nach Anspruch 1, **dadurch gekennzeichnet, dass** die zusätzliche Dauer (tₚₗᵤₛ) durch eine Rechnung bestimmt wird, die darin besteht, dass die Differenz zwischen der ersten und der zweiten Temperaturhöhe (U₁, U₂) gebildet wird, diese Differenz mit einem bestimmten Koeffizienten (C₇) multipliziert wird, dann dem erhaltenen Ergebnis eine festgelegte Dauer (t₇) hinzugefügt wird.

3. Verfahren nach einem der vorhergehenden Ansprüche, **dadurch gekennzeichnet, dass** die vorbestimmte Dauer (t₆) zwischen 5 s und 10 s, vorzugsweise nahe 8 s beträgt.

4. Verfahren nach einem der vorhergehenden Ansprüche, **dadurch gekennzeichnet, dass** die Schale dünn ist und dass die Temperaturmessungen mit Hilfe eines Widerstands mit negativem Temperaturkoeffizienten durchgeführt werden.

5. Verfahren nach Anspruch 4, **dadurch gekennzeichnet, dass** der Widerstand mit negativem Temperaturkoeffizienten auf der Schale in einem Bereich positioniert ist, der frei von dem elektrischen Heizelement ist, wobei dieser Bereich also bei der Durchführung dieses Verfahrens relativ kalt bleibt.

6. Verfahren nach Anspruch 5, **dadurch gekennzeichnet, dass** die Stromversorgung des elektrischen Heizelements durch eine elektronische Vorrichtung gesteuert wird, die in diesem Bereich positioniert ist.

7. Verfahren nach einem der Ansprüche 5 oder 6, **dadurch gekennzeichnet, dass** die elektronische Vorrichtung in Nähe des Widerstands mit negativem Temperaturkoeffizienten positioniert ist.

8. Verfahren nach einem der vorhergehenden Ansprüche, **dadurch gekennzeichnet, dass** es einen iterativen Schritt (3, 4, 5) umfasst, der darin besteht,
- dass das Heizelement versorgt wird;
- dass die laufende Temperaturhöhe (U₁) in regelmäßigen Intervallen gemessen wird;
wobei der iterative Schritt (3, 4, 5) endet, wenn die laufende Temperaturhöhe (U₁) die vorbestimmte Schwelle (U_{C}) erreicht.

9. Vorrichtung zur Steuerung eines elektrischen Haushaltgeräts zur Erhitzung von Flüssigkeit gemäß dem Verfahren eines der vorhergehenden Ansprüche, **dadurch gekennzeichnet, dass** sie einen Widerstand mit negativem Heizkoeffizienten, ein Schaltelement, wie ein Relais oder einen TRIAC, das dazu bestimmt ist, die Versorgung des Heizelements auszulösen oder abzuschalten, sowie eine Speichereinheit umfasst, die mindestens zwei Register umfasst, die dazu bestimmt sind, Temperaturhöhen zu speichern.

10. Vorrichtung nach Anspruch 9, **dadurch gekennzeichnet, dass** sie eine Wärmesicherheitskomponente umfasst, die die Unterbrechung des Heizverfahrens nach einem der Ansprüche 1 bis 8 auslöst, wenn die Geschwindigkeit der Erhöhung der Temperatur des Temperaturmesselements höher als eine vorbestimmte Grenzgeschwindigkeit ist, so dass die Erhitzung bei Fehlen von Flüssigkeit unterbrochen wird.
